(19)

Europäisches Patentamt

European Patent Office

Office européen des brevets

(11)  **EP 4 517 392 A1**

(12)  **EUROPEAN PATENT APPLICATION**

(43) Date of publication:
05.03.2025   Bulletin 2025/10

(21) Application number: 23194279.8

(22) Date of filing: **30.08.2023**

(51) International Patent Classification (IPC):
*G01V 3/08* (2006.01)       *B63G 7/06* (2006.01)
*B63G 7/08* (2006.01)       *G01V 3/12* (2006.01)
*G01V 3/165* (2006.01)      *G01V 3/17* (2006.01)

(52) Cooperative Patent Classification (CPC):
**G01V 3/081; B63B 22/06;** B63B 2022/006;
G01V 3/12; G01V 3/165; G01V 3/17

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Antselevich, Mikhail Aleksandrovich
84710 65 Beersheba (IL)**

(72) Inventor: **Antselevich, Mikhail Aleksandrovich
84710 65 Beersheba (IL)**

(74) Representative: **Jeck, Anton
Jeck, Fleck & Partner mbB
Patentanwälte
Klingengasse 2
71665 Vaihingen/Enz (DE)**

(54)  **METHOD AND DEVICE FOR DETECTING UNDERWATER ROBOTS AND DRONES**

(57)     The invention relates to the field of detection of underwater ferromagnetic and other objects of artificial origin.

The technical result of the invention is to increase the detection range of underwater ferromagnetic and other objects, such as underwater robots and drones, with a complex and heterogeneous structure.

The proposed detection method is based on the use of one emitting magnetic loop antenna in two modes of operation: the first - the mode of parametric magnetization; the second - induction with registration of parametric modulation, and the channel of mechanical force impact by electro-hydraulic shock. At the same time, due to the high penetrating power of the pulsed magnetic and mechanical shock physical fields through the body shell, a violation of the functioning of the electronic circuits of the detected object is recorded as an additional informative sign.

Fig. 1 Block diagram of the device

**Description**

*The field of technology to which the invention belongs*

The invention relates to the field of detection of underwater ferromagnetic and other objects of artificial origin, in particular, to the detection of underwater robots and drones, which are the most widespread in the modern world.

The most difficult is the problem of detecting stationary objects. These are the so-called underwater "bookmarks" - robocapsules that are on duty under water for many weeks, months or years, which are activated on a signal, acting underwater or above water after surfacing and activating one or another function.

The detection of such underwater robocapsules is an extremely urgent task for ensuring the safety of sea and river ports, ships, and coastal infrastructure facilities.

*Technical level*

It is a known hydroacoustic method of detecting objects in the aquatic environment based on the registration of a hydroacoustic signal reflected from an underwater object [1].

The disadvantage of this method is the practical impossibility of detecting a stationary underwater object against the background of interference, primarily from the unevenness of the bottom.

It is a known induction method for detecting ferromagnetic (and non-ferromagnetic) metal objects [2].

The disadvantage of this method is an insignificant detection range, comparable to the size of the search element (loop antenna).

Closest to the claimed invention is a magnetometric detection method that allows you to detect ferromagnetic objects in various environments, incl. in water [3].

It is known that the magnetometric method makes it possible to fix spatial distortions of the Earth's magnetic field created by a ferromagnetic search object. Detection of objects with ferromagnetic elements in their design (hull, mechanical and electrical parts) is possible in any natural sheltering environment: sea and freshwater, clay and sandy soils, ice, etc. at considerable depths.

The intensity of the Earth's magnetic field at the magnetic equator is 0.34 Oersted, at the magnetic poles it is 0.66 Oersted, and at middle latitudes it is 0.57 Oersted (about 40 A/m in the SI system).

In the field, magnetometers are most widely used. Using two magnetic receivers, a device is created for measuring the difference in the magnetic field induction at two points in space. In this case, the device is called a magnetic gradiometer.

The disadvantage of this method is the insufficient detection range of local ferromagnetic objects, no more than 6-8 meters. The characteristic dimensions of such objects are decimeters ... units of meters.

*Disclosure of the essence of the invention*

The technical result of the invention is to increase the detection range of underwater ferromagnetic and other objects, such as underwater robots and drones, with a complex and heterogeneous structure.

The technical result is achieved by the method according to claim 1. Detection of underwater ferromagnetic objects is carried out due to the additional introduction of a channel of a shock pulsed magnetic field, which magnetizes the ferromagnetic elements of the object being detected, wherein the change (increase) in the magnetic field of the object occurs due to residual magnetization, which is recorded by a magnetometric receiver.

At the same time, the technical result is achieved by the method according to claim 2. Detection of underwater ferromagnetic (and non-ferromagnetic) objects is carried out due to additional pulsed mechanical force impact by electro-hydraulic shock and informational impact of a harmonic magnetic field from a magnetic loop antenna on the object to be detected with registration of parametric modulation ("burst") of the reflected harmonic magnetic field.

An important direction of increasing the maximum detection depth is to create conditions under which the search object will distort the Earth's magnetic field more strongly. This is achieved through the method of remote parametric magnetization, which is a special case of parametric location in semiconducting media.

In the first approximation, the local detectable object can be replaced by a solid ferromagnetic sphere. A ferromagnetic sphere in the uniform magnetic field of the Earth acts like a magnetic dipole with a moment determined by the formula:

$$\vec{M}_{sp} = 4\pi R_{sp}^3 \frac{\mu_1 - \mu_0}{\mu_1 + 2\mu_0} \mu_0 \vec{H}_0 \qquad (1)$$

where $R_{sp}$ - radius of ferromagnetic sphere (search object);

$\mu_1$ - magnetic permeability of the sphere material;

$\mu_0$ - magnetic permeability of the natural environment (water, soil);

$H_0$ - Earth's permanent magnetic field.

In practice, when searching for local ferromagnetic objects, most often they measure not the magnitude of the absolute value of the anomalous magnetic field, but its gradient.

The maximum detection range of a ferromagnetic sphere using a magnetic gradiometer can be estimated by the formula:

$$r_{det} = \sqrt[4]{\frac{6R_{sp}^3 \mu_0 H_0}{\frac{\partial B}{\partial r} min}} \text{ , m} \qquad (2)$$

where $\dfrac{\partial B}{\partial r} \, min$ - field gradiometer sensitivity, T/m. (distortion of the magnetic field in space per unit length, where B is the magnetic induction).

The actual sensitivity of modern portable magnetic gradiometers is $10^{-7}...10^{-8}$ T/m. With a ferromagnetic sphere radius of 0.3 ... 0.5 m, its detection range at sensitivity $10^{-8}$ T/m is 6 ... 8 m.

The vast majority of bodies of underwater robots, which are located in the water column, are made from polycrystalline ferromagnetic materials, mainly from steel.

Depending on the chemical composition of the alloy and the geometric shape of the object, various structural and phase changes in its physical and mechanical properties occur during magnetization (Pic. 1). These changes generally lead to a qualitative increase in the efficiency of search equipment, regardless of the principles of its construction.

Pic.1. Causal structure of the process of parametric magnetization of search objects

Thus, phase changes generally lead to an increase in the intrinsic magnetic field due to a stronger degree of orientation of the magnetic moments of the domains.

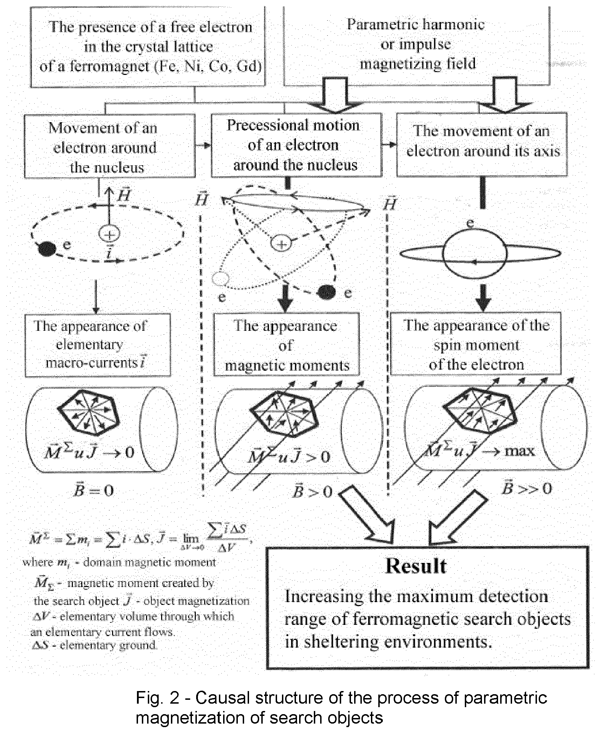

Pic.1 = Fig. 2. Causal structure of the process of parametric magnetization of search objects

Thus, phase changes generally lead to an increase in the intrinsic magnetic field due to a stronger degree of orientation of the magnetic moments of the domains.

Pic.1. Causal structure of the process of parametric magnetization of search objects

Thus, phase changes generally lead to an increase in the intrinsic magnetic field due to a stronger degree of orientation of the magnetic moments of the domains.

DETECTION RANGE OF A MAGNETIZED ferromagnetic sphere can be estimated using the expression:

$$r_{det} = \sqrt[4]{\frac{6R_{sp}^3 \mu_0 (H_0 + K_{dem} H_{ext})}{\frac{\partial B}{\partial r} min}}, \text{ m} \qquad (3)$$

where $K_{dem}$ - demagnetization coefficient (for a sphere it is 0.33);

$H_{ext}$ - amplitude of external magnetization, A/m.

It follows from expression (3) that the magnetization of the sphere by a pulsed magnetic field with an amplitude of 1 kA/m will increase the detection range by approximately 80%.

It should be noted that the duration of the magnetizing pulse can be quite short. With a wall thickness of the search object of 1 ... 10 mm, it is only tenths ... hundredths of a second. It is determined by the thickness of the "skin layer" for steel based on the theory of shielding [4, 5]. The short duration of the pulses with a long pause (units ... tens of seconds) provides low power consumption in the technical implementation of the method.

In order to test the most complex component of the proposed method, an experiment was conducted in the field.

The detection range of ferromagnetic objects in fresh and sea water is the same as in the ground. Moreover, in the latter case, soil moisture does not affect the detection range.

When searching in water, the magnetometer was mounted on a non-magnetic floating vehicle (rubber boat). The craft did not contain ferromagnetic elements (staples, nails, clips, etc.) in its design.

The experimental setup created an amplitude of a pulsed magnetic field of 500 ... 700 A/m with a duration of 20 ms at the location of the search objects. The search objects were:

- steel spheres with a diameter of 5 cm and 10 cm (reference search objects);

- steel pipe with a diameter of 10 cm and a length of 30 cm (model of an underwater robot).

A portable magnetometer MBI-2 with a sensitivity of up to $10^{-7}$ T/m was used as a search instrument.

Measurements were also made in freshwater ($\varepsilon = 80$, $\sigma_c = 10^{-2}$ S/m) in a pond 2.5 m deep. The detection range of objects was the same as in air. The MBI-2 magnetometer was placed on a rubber boat.

Ferromagnetic search objects subjected to remote magnetization at $H_{ext} = 500$ ... 700 A/m were detected at distances 1.5 ... 2 times greater than the limiting capabilities of the MBI-2 magnetometer. As noted above, in order to increase the detection range of ferromagnetic objects by the magnetometric method, the invention proposed a method for remote parametric magnetization of the search object.

However, it is also necessary to detect objects made of non-ferromagnetic materials.

Also **new in the invention** (according to claim 2 of the formula) is an increase in the detection range not only of a ferromagnetic underwater object, but also of any metal search object. It also becomes possible to carry out recognition and determine the range of its detection.

In the claimed method, two channels are additionally included: the first is a channel of pulsed mechanical force impact by an electro-hydraulic shock, and the second is a channel of informational impact by a harmonic magnetic field from a magnetic loop antenna on a detected object with registration of parametric modulation ("burst") of the reflected harmonic magnetic field.

The search object is emitted with a probing low-frequency magnetic field and the field reflected from the surface of the object is recorded. Additionally, a pulsed mechanical force impact is carried out from an electro-hydraulic shock (EHS) installation.

The search object has a rather complex structure, so the reflection diagram of the secondary magnetic field from the real object also has a complex needle shape. This enhances the effect of amplitude parametric modulation of the signal during the back reflection due to the fact that the phase also changes in the reflected harmonic field. Therefore, when using a phasesensitive receiver, the effect of parametric modulation is significantly enhanced.

In view of the foregoing, the secondary (reflected) magnetic field from the search object is determined by the expression:

$$\dot{H}_2 = \frac{\dot{M}}{4\pi\mu_0} \dot{D} \frac{3r_{sp}^3}{8\pi h^3 r^3} \quad , \quad \text{A/m} \qquad (4)$$

where $\dot{M}$ - magnetic moment of the emitting loop antenna;
$\mu_0 = 4\pi \cdot 10^{-7}$ H/m ;
$r_{sp}$ - search object radius (sphere), m;
$h$ - distance between the search object and the magnetic loop antenna, m;
$r$ - distance between the search object and the receiver of reflected magnetic field, m

* $\dot{D}$ is a function describing the anomalous low-frequency magnetic field on the surface of an object [6].

Since the distances to the detected object are not large and the frequencies used are rather low (hundreds of Hz - units of kHz), the losses of the low-frequency harmonic magnetic field in seawater ($\varepsilon = 80$, $\sigma_c = 4$ S/m) are insignificant.

Under the impact of a hydroacoustic shock from the EHS installation, a short-term (impulse) change in the distances (r and h) between the search object, the magnetic loop antenna and the receiver occurs. This causes parametric amplitude modulation ("burst") of the reflected

signal. At the same time, characteristic resonant oscillations also occur. Each type of object has its own spectrum of vibrations, which makes it possible to recognize them. In addition, it is possible to carry out optimal filtering of the received signal, which increases the sensitivity of the receiver and, accordingly, increases the detection range.

By measuring the time of passage of a hydroacoustic shock from the EHS installation to the search object, it is

possible to estimate the distance to this object [7]. In this case, the shock wave velocity in water, as is known, is a stable value of 1485 m/s.

Practice shows that motionless robots - "bookmarks" in sleep mode are able to mask themselves in layers of silt and soil deposits against the background of the seabed topography, that is why their search is extremely difficult. The passage of mechanical vibrations in the form of hydroacoustic waves through these layers is accompanied by significant losses.

**In the claimed invention** (according to claim 3 of the formula), it is proposed to use the deep penetrating properties of the magnetic field (which equally propagates both in soil and in sea water), and as a mechanical impact - the force of shock waves.

The presence of deep penetrating properties of pulsed magnetic and mechanical shock physical fields through the shell of the body of the object being detected causes a partial malfunction of the electronic circuits inside the object, which changes the mode of their operation and leads to a change in the level of the reflected signal in the form of a characteristic "burst". Thus, in connection with even partial damage to the electronic circuits of the underwater robot and drone, an additional informative sign arises. The required parameters of the pulsed magnetic field are given below:

In the first approximation, these local search objects can be represented as a hollow sphere or an elongated spheroid with electronic elements inside. As is known, the malfunction of typical radio circuits caused by induced voltages begins to manifest itself at a pulsed magnetic field strength of more than 100 Alm [8,9]. In this case, the amplitudes of the voltages induced in the contours of the circuits and their shape are mainly determined by the following factors:

- magnetic field strength, rise and fall duration;
- the geometric dimensions of the contours of the circuits;
- denominations of components;
- mutual orientation of circuits and magnetic field vector;
- electrical mode (supply voltage, sensitivity to a change in the polarity of input signals);
- the constructive arrangement of mounting circuits relative to the metal case of the equipment.

Penetration of pulsed magnetic field inside the shielding structures is due to two mechanisms: field diffusion through the walls due to the non-ideal conductivity of the latter, field penetration through the holes.

As it is known, a pulse signal can be represented as a sum of harmonic components. In a rigorous setting, to determine the penetration of harmonic electromagnetic fields penetrating inside solid conducting screens, a boundary problem is posed: Maxwell's equations are considered in three regions (in the outer, in the walls of the screen and in the inner) with the assignment of boundary conditions on the surfaces separating these boundaries. For screens (cases) of the simplest configurations, as a result, analytical expressions for transfer functions are obtained, i.e., the ratio of the field that penetrated the screen to the external one [10]. From the transfer function, the screen's impulse response can be obtained by an inverse Fourier transform. However, the frequency dependence of the transfer functions of even the simplest screens is still quite complicated and it will not be possible to obtain an expression for the impulse response of the screens in an analytical form with a finite number of terms [11].

With a simplified solution of the problem of penetration of a pulsed magnetic field through the metal shell of the screen, it is possible to use the average frequency of the video pulse spectrum. This makes it possible to apply the well-developed provisions of the theory of the propagation of harmonic electromagnetic fields through conductive media.

The process of propagation of a harmonic magnetic field in a conductor is described by the expressions:

$$H_f = H_1 e^{-ah}, \ k_a = \frac{H_p}{H_1} \tag{5}$$

$$a = \sqrt{\frac{\gamma \mu_{rel} \mu_0 \omega_{sur}}{2}} \tag{6}$$

$h$ - field penetration depth into metal, m

$\mu_0 = 4\pi \cdot 10^{-7}$ magnetic permeability in vacuum, H/m

The average frequency of the video pulse spectrum is:

$$F_{avg} = \frac{1}{2\Delta T}, \ \text{Hz} \tag{7}$$

where $\Delta T$ the duration of the magnetic field pulse.

In its turn:

$$\omega_{sur} = 2\pi F_{sur} , \text{Hz} \qquad (8)$$

Attenuation factor $K_a$ - is the ratio of the magnetic field amplitude $H_f$ in the thickness of the conductor (metal) to the amplitude of this field on its surface (before penetration into the metals) $H_1$.

Currently, the hulls (shells) of underwater small-sized devices - robots and drones are often made of titanium rather than steel. This is due to two factors:

- higher strength of titanium than steel;
- lack of magnetic unmasking properties, which makes it difficult to detect them.

The thickness of the walls of the shell is, as a rule, a few millimeters, i.e., from 1 to 10 mm.

Illustration 2 shows the dependences of the attenuation coefficient of the pulsed magnetic field on the duration of these pulses. Reducing the duration increases the average frequency of the spectrum, which leads to an increase in the attenuation of the field in the thickness of the metal (titanium).

Characteristics of titanium in the calculations:

- electrical conductivity $\gamma = 2 \cdot 10^7$ *S/m,*

Pic. 2 Dependences of the attenuation coefficient of a pulsed magnetic field in a metal on the pulse duration. Body (screen) material - titanium.

- The relative magnetic permeability is 1 (paramagnetic).

It follows from Pic. 2 that with a magnetic field pulse duration of more than 1 ms and a titanium shell thickness of 1 mm to 10 mm, the losses are insignificant, since the field penetrates into the screen. This allows the use of a pulsed magnetic field to disable the internal modules of underwater objects containing electronic components in their design.

The intensity of the pulsed magnetic field of 100 A/m and more can be created by the installation of electro-hydraulic shock (EHS). Wherein, in this case, the battery of high-voltage capacitors is connected not to the spark gap, but to a loop antenna of large diameter (several meters).

**Impulse mechanical force impact** (also according to claim 3) by electro-hydraulic shock also has a high penetrating ability, both through the ferromagnetic shell and through the walls of the object's body made of other materials and also through the bottom sediments of silt and soil.

It is well known that most shells (cases) of underwater robots and drones are made of ferromagnetic materials.

However, it is necessary to take into account the possibility of their execution from other materials that do not have magnetic properties, such as titanium, bronze, brass and others.

The hydroacoustic shock wave creates an impulse overpressure and penetrates through the non-ferromagnetic shell of the search object. An overpressure impulse from an electro-hydraulic shock penetrates the shell and causes a resonant "burst", the object "shudders".

Moving and stationary parts of the object (robot or drone) are placed inside the body shell: electric motor, battery, electromechanical drives of manipulators, mechanical elements of executive modules, control system devices. Their positions inside the shell of the body are connected by fasteners, pulleys, hinges and springs.

The electronics of underwater robots and drones can be disabled using shock waves [12-14]. A distinctive feature of this process is that the conversion of electrical energy into mechanical energy takes place without intermediate links. The pressure in the discharge channel between high-voltage electrodes (characteristic distances of units ... tens of centimeters) can reach tens of thousands of atmospheres. The voltage value, as a rule, lies in the range from 10 kV to 100 kV. In this case, the time of the electric discharge itself is, most often, units ... tens of m i-croseconds. Such times are typical for explosions of small charges (tens of grams - units of kilograms) from ordinary TNT.

The expression for estimating the pressure at the shock wave front in water generated by an electro-hydraulic shock installation (EHS) has the form:

$$\Delta P = 1,2\left(\sqrt[3]{\eta C U^2}\right)/R, \text{ atm.} \qquad (9)$$

$$W = \frac{CU^2}{2}, \text{ J} \qquad (10)$$

where C - capacitor bank capacity, F

$U$ - voltage across capacitors, V

$\eta$ - coefficient of conversion of the electrical energy of the discharge into the mechanical energy of the shock wave ($0 < \eta < 0,35$).

Pic. 3 shows the dependences of the pressure at the front of the shock wave created by the EHS installation on the distance (atm = 0.25).

Pic. 3 Dependences of the pressure at the front of the shock wave created by the EHS installation on the distance Disabling underwater objects is likely in two cases:

- destruction of the metal case (titanium, steel);

- malfunction of various electronic devices located inside the case.

In the first case, the impulse pressures should be hundreds of atm. in the second - tens of atm. (approximately).

An analysis of modern underwater robots and drones shows the presence in their systems of orientation and target designation - hydroacoustic sensors of various configurations. Basically, sensitive hydroacoustic sensors are used, made in one piece with the hull shell.

The malfunction of a vulnerable hydroacoustic receiving sensor is possible by disrupting the operation of the input sensitive amplifier, due to the impact of a large impulse voltage created by the piezoelectric sensor.

However, in case of impact on an underwater object - a robo-capsule, by a force electro-hydraulic shock and a pulsed magnetic field in order to disable the hydroacoustic and magnetic orientation and target designation external sensors, it must be understood that in the SLEEP MODE, the sensitive sensors are INACTIVE, the electronic circuits are turned off and there are protection devices for environmental contact sensors and electronics. In this regard, the malfunction of the hydroacoustic and magnetic orientation sensors of the target designation of the robocapsule in sleep mode is UNLIKELY.

That is why an important case for practice is the penetration of a shock hydroacoustic wave through the metal shell of the body.

Practically, a metal plate located in the water is considered. As is known, the pressure in an incident wave changes exponentially. Having allowed some simplifications (we will assume that the shock wave propagates along the hull shell and structural elements), the pressure behind the metal plate can be determined using the equations [12-14]:

$$P_2(t) = \frac{2P_1}{2\gamma - 1}\left[e^{-\frac{t}{\theta}} + e^{-2\gamma\frac{t}{\theta}}\right]; \qquad (11)$$

$$\gamma = \frac{\rho_0 c_0 \theta}{\rho \, \delta}; \qquad (12)$$

$$\theta = 1,5\frac{R_0}{C_0}\left(\frac{R}{R_0}\right)^{1,18} \qquad (13)$$

where $\rho$ - plate material density;

$\delta$ - plate thickness, m

$\gamma$ - complex parametric coefficient;

$\rho_0$ - density of water;

$c_0$ - speed of sound in calm water, m/s

$\frac{R}{R_0}$ - reduced distance.

From Pic. 4 it can be seen that the protective properties of the metal plate, when placed in ter,

Pic. 4 Pressure in a passing shock wave behind a metal plate as a function of time are insignificant. The maximum pressure behind the barrier is reduced by no more than 20%.

Thus, almost all the energy of the mechanical force produced by the electro-hydraulic shock is applied to the shell and the internal structure of the object being detected.

It can be noted as a conclusion.

The foregoing allows: to detect both ferromagnetic objects and objects which shell is made of a non-magnetic material - a paramagnetic (titanium, aluminum), to recognize them (according to the spectrum of mechanical resonance vibrations) and range - according to the time of passage of a hydroacoustic shock wave, as well as to detect stationary objects hidden under a layer of silt and soil, due to the deep penetrating properties of pulsed magnetic and mechanical shock physical fields through the metal shell of the case.

In this case, one magnetic loop antenna is used (alternately) in two modes: the first - the mode of pulsed magnetization of the object; the second - induction with the registration of parametric modulation.

In the first case, a force magnetic field is created to magnetize the detected object; in the second case, the information impact by a harmonic magnetic field.

At the same time, its own electro-hydraulic shock installation (EHS) is used as a powerful underwater source of electrical energy, which has as a load:

1 - in the case of creating a shock pulsed magnetic field - an emitting magnetic loop antenna of vibration-proof design (operating in the mode of magnetization of the search object);
2 - in the case of the formation of a harmonic magnetic field - an emitting magnetic loop antenna forming an induction channel (information impact with registration of parametric modulation);
3 - in the case of mechanical force impact - an electro-hydraulic discharger that generates an overpressure impulse (shock hydroacoustic wave).

*Implementation of the invention*

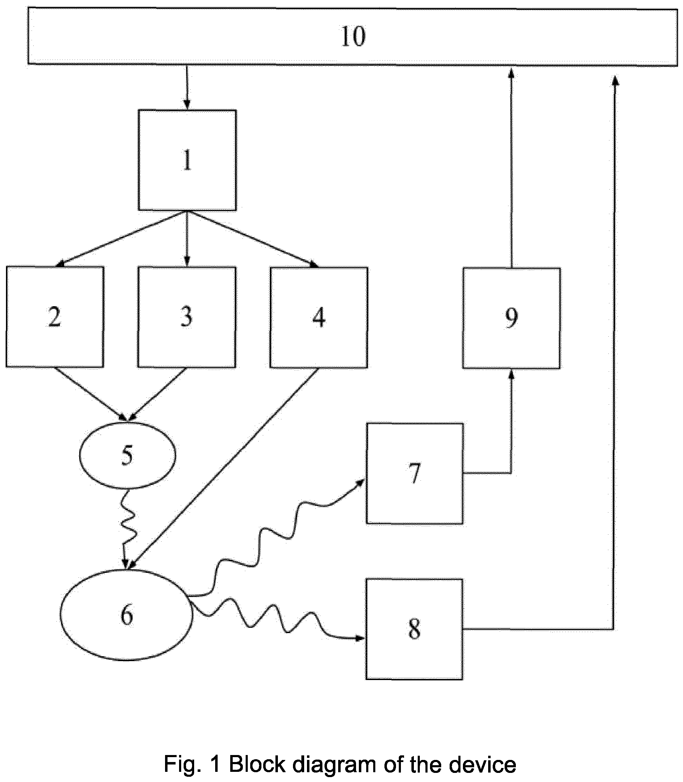

Fig. 1 shows a block diagram of a device that implements the proposed method for detecting underwater robots and drones on the seabed.

In the search mode, the generator 2 through the magnetic loop antenna 5 emits a shock pulsed magnetic field into the aquatic environment, that magnetizes the search object 6, which, due to residual magnetization, distorts the Earth's magnetic field, which increases the range of its detection by the magnetometric receiver 8 (remote parametric magnetization mode).

The harmonic signal generator 3 through the magnetic loop antenna 5 periodically emits a low-frequency harmonic magnetic field into the aquatic environment, at the same time, the source of pulsed mechanical force 4 generates a hydroacoustic shock wave, which, affecting on the search object, causes parametric modulation of the reflected harmonic magnetic field. Getting into the detection zone, the search object 6 reflects the low-frequency magnetic field, which is recorded by the magnetometric receiver 7 (search mode). At the same time, due to the high penetrating power of the pulsed magnetic and mechanical shock physical fields through the body shell, a violation of the functioning of the electronic circuits of the detected object is recorded as an additional informative sign ("burst" in the reflected magnetic field).

The operation of the shock pulsed magnetic field generator 2 and the generator of pulsed mechanical force impact 4 is carried out from its own electro-hydraulic shock installation (EHS) 1. In the case of pulsed parametric shock magnetization, the output of the EHS is connected to emitting magnetic loop antenna of large diameter (several meters), and in case of mechanical force impact, the EHS installation output is switched by the device 10 to another load (electrode system), which creates a hydroacoustic shock wave.

The control module 10 provides: switching the operating modes of the EHS installation 1 and generators 2-4, power supply to all modules of the installation, control of the operation of the harmonic magnetic field receiver 7, magnetometric receiver 8, object range meter 9, data processing and storage and information display.

Information sources:

1. Bukaty V.M. Commercial hydroacoustics and fish location, M.: "Mir", 2003, pp. 457-488;

2. Goncharsky V.N. et al. Technical bases of aeroelectroreconnaissance. Science thought. Kyiv 1969, 380 p.

3. Shcherbakov G.N. Detection of hidden objects. M.: "Arbat-Infom", 2004, p.28-33;

4. Shapiro D.N. Fundamentals of the theory of electromagnetic shielding. Energiya, Leningrad, 1975, 112 p.

5. Apollonsky S.M. Calculation of electromagnetic shielding shells. Energoizdat, Leningrad, 1982, 144 p.

6. Goncharsky V.N. et al. Technical bases of aeroelectroreconnaissance. Science thought. Kyiv 1969, 380 p.

7. Bukaty V.M. Commercial hydroacoustics and fish location. "World". Moscow, 2003, 496 p.

8. Ricketts L.W. and other Electromagnetic impulse and methods of protection. Per. from English. Ed. Ukhina N.A., M., Atomizdat, 1979, 328 p.

9. On the influence of the conditions of a nuclear explosion on the operation of military electronic systems. Radioelectronics abroad. M. 1985 Issue. 9 (1033), p. 10 - 13.

10. Kolensky L.L., Medvedev Yu.A. Penetration of impulse electromagnetic waves into the cavity of a conducting cylinder. Izv. universities. Ser Radiophysics 1969 T.XII, N 4 p. 588 -592.

11. Myrova L.O. Ensuring the resistance of communication equipment to ionizing and electromagnetic radiation. M. Radio and communication, 1988, p. 296.

12. Ozeretskovsky O.I. The effect of an explosion on underwater objects. M. FSUE "TsNIIKhM" 2007, p.262.

13. Cole R. Underwater explosions. M. IL, 1950.

14. Zamyshlyaev B.V. Dinamicheskie nagruzki pri podvodnom vzryv [Dynamic Loads in Underwater Explosions]. L. Shipbuilding, 1967

**Claims**

1.  A method for detecting underwater robots and drones using a magnetometric search for ferromagnetic objects, **characterized in that**, due to a powerful underwater source of electrical energy and a emitting magnetic loop antenna, a shock pulsed magnetic field is created that magnetizes the ferromagnetic elements of the object being detected, while changing (increasing) the object's magnetic field occurs due to residual magnetization, which is recorded by a magnetometric receiver.

2. The method according to claim 1, **characterized in that** additionally, a pulsed mechanical force impact is performed by an electro-hydraulic shock and an information impact by a harmonic magnetic field from a magnetic loop antenna on the metal search object with registration of parametric modulation of the reflected harmonic magnetic field.

3. The method according to claim 1 and claim 2, **characterized in that** the deep penetrating properties of pulsed magnetic and mechanical shock physical fields through the metal shell of the body of the object being detected are used, which causes a malfunction of the electronic circuits inside the object, changes their mode of operation and leads to a change in the level of the reflected signal in the form of a characteristic "burst", which is recorded as additional informative sign.

4. A device containing a magnetometric receiver (8) (with a block for recording the results of measurements of the magnetic field distortion from the search object 6), **characterized in that** it includes: a powerful source of electrical energy (1), a shock pulsed magnetic field generator (2), a harmonic generator signal (3), a source of pulsed mechanical force (4), a radiating magnetic loop antenna in a vibration-proof design (5), a reflected magnetic field receiver (7), an object range meter (9), a control module (10).

Fig. 1 Block diagram of the device

Fig. 2 - Causal structure of the process of parametric magnetization of search objects

Europäisches
Patentamt

European
Patent Office

Office européen
des brevets

# EUROPEAN SEARCH REPORT

Application Number

EP 23 19 4279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 598 152 A (SCARZELLO JOHN F [US] ET AL) 28 January 1997 (1997-01-28) * column 1, paragraph 2-4 * * column 2, paragraph 2 * * figures 1-7 * | 1 | INV. G01V3/08 B63G7/06 B63G7/08 |
| X | AU 632 320 B2 (CANDY BRUCE HALCRO) 24 December 1992 (1992-12-24) * claims 1, 10 * | 1 | ADD. G01V3/12 G01V3/165 G01V3/17 |
| X | RU 2 444 765 C2 (SHCHERBAKOV GRIGORIJ NIKOLAEVICH [RU] ET AL.) 10 March 2012 (2012-03-10) | 1,2,4 | |
| Y | * abstract * * page 4, lines 1-13, 39-51 * * claims 1-4 * | 3 | |
| X | KR 102 293 774 B1 (HAN JAE SIN [KR]) 25 August 2021 (2021-08-25) | 1 | |
| Y | * paragraphs [0001] - [0006]; figure 1 * | 3 | |

TECHNICAL FIELDS
SEARCHED (IPC)

G01V

The present search report has been drawn up for all claims

| Place of search | Date of completion of the search | Examiner |
|---|---|---|
| The Hague | 14 February 2024 | Naujoks, Marco |

EPO FORM 1503 03.82 (P04C01)

2

## ANNEX TO THE EUROPEAN SEARCH REPORT
## ON EUROPEAN PATENT APPLICATION NO.

**EP 23 19 4279**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-02-2024**

| Patent document cited in search report | | Publication date | Patent family member(s) | Publication date |
|---|---|---|---|---|
| US 5598152 | A | 28-01-1997 | NONE | |
| AU 632320 | B2 | 24-12-1992 | NONE | |
| RU 2444765 | C2 | 10-03-2012 | NONE | |
| KR 102293774 | B1 | 25-08-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BUKATY V.M**. Commercial hydroacoustics and fish location. *M.: "Mir*, 2003, 457-488
- **GONCHARSKY V.N. et al.** Technical bases of aeroelectroreconnaissance. *Science thought. Kyiv*, 1969, 380
- **SHCHERBAKOV G.N**. Arbat-Infom. *Detection of hidden objects. M*, 2004, 28-33
- **SHAPIRO D.N**. Fundamentals of the theory of electromagnetic shielding.. *Energiya, Leningrad*, 1975, 112
- **APOLLONSKY S.M**. Calculation of electromagnetic shielding shells. *Energoizdat, Leningrad*, 1982, 144
- **BUKATY V.M**. World. *Commercial hydroacoustics and fish location*, 2003, 496
- Electromagnetic impulse and methods of protection. Per. from English. **RICKETTS L.W**. Atomizdat. 1979, 328

- On the influence of the conditions of a nuclear explosion on the operation of military electronic systems. *Radioelectronics abroad. M.*, 1985, vol. 9 (1033), 10-13
- **KOLENSKY L.L** ; **MEDVEDEV YU.A**. Penetration of impulse electromagnetic waves into the cavity of a conducting cylinder. *Izv. universities. Ser Radio-physics*, 1969 (4), 588-592
- **MYROVA L.O**. Ensuring the resistance of communication equipment to ionizing and electromagnetic radiation. *M. Radio and communication*, 1988, 296
- **OZERETSKOVSKY O.I**. The effect of an explosion on underwater objects. *M. FSUE "TsNIIKhM*, 2007, 262
- **COLE R**. *Underwater explosions. M. IL*, 1950
- **ZAMYSHLYAEV B.V**. Dinamicheskie nagruzki pri podvodnom vzryv [Dynamic Loads in Underwater Explosions. *L. Shipbuilding*, 1967